# EUROPÄISCHE PATENTSCHRIFT

(11) **EP 2 760 635 B1**
(45) Veröffentlichungstag und Bekanntmachung des Hinweises auf die Patenterteilung: **21.01.2015**
(21) Anmeldenummer: 12743446.2
(22) Anmeldetag: 01.08.2012
(51) Int. Cl.: B24B 23/02, B24B 55/00, F16D 65/14, B23Q 11/00

(54) **WERKZEUGMASCHINENBREMSVORRICHTUNG**
BRAKING DEVICE FOR A MACHINE TOOL
DISPOSITIF DE FREINAGE POUR UNE MACHINE OUTIL

(30) Priorität: 26.09.2011 DE 102011083430
(43) Veröffentlichungstag der Anmeldung: 06.08.2014
(73) Patentinhaber: Robert Bosch GmbH, 70442 Stuttgart (DE)
(72) Erfinder: ESENWEIN, Florian, 70771 Leinfelden-Echterdingen (DE)
(86) Internationale Anmeldenummer: PCT/EP2012/065004
(87) Internationale Veröffentlichungsnummer: WO 2013/045138

(56) Entgegenhaltungen:
- EP-A2- 1 240 983
- DE-A1-102008 054 694
- DE-C2- 19 510 291

## Beschreibung

### Stand der Technik

Aus der DE 195 10 291 C2 ist bereits eine Werkzeugmaschinenbremsvorrichtung, insbesondere eine Handwerkzeugmaschinenbremsvorrichtung, einer tragbaren Werkzeugmaschine bekannt, die eine Bremseinheit umfasst, die dazu vorgesehen ist, zu einer Erzeugung einer Bremskraft in einer Bremsstellung der Bremseinheit zumindest teilweise eine Relativbewegung zwischen einem Mitnehmerelement der Bremseinheit und einem Bremselement der Bremseinheit in eine weitere Relativbewegung zwischen dem Mitnehmerelement und dem Bremselement zu überführen.

### Offenbarung der Erfindung

Die Erfindung geht aus von einer Werkzeugmaschinenbremsvorrichtung, insbesondere von einer Handwerkzeugmaschinenbremsvorrichtung, einer tragbaren Werkzeugmaschine, mit zumindest einer Bremseinheit, die dazu vorgesehen ist, zu einer Erzeugung einer Bremskraft in einer Bremsstellung der Bremseinheit zumindest teilweise eine Relativbewegung zwischen zumindest einem Mitnehmerelement der Bremseinheit und zumindest einem Bremselement der Bremseinheit in eine weitere Relativbewegung zwischen dem Mitnehmerelement und dem Bremselement zu überführen.

Es wird vorgeschlagen, dass die Werkzeugmaschinenbremsvorrichtung zumindest eine Bewegungseinheit umfasst, die in zumindest einem Betriebszustand zu einer Bewegung des Bremselements in Richtung des Mitnehmerelements zumindest zu einer Erzeugung einer Kraftkomponente in Richtung des Mitnehmerelements vorgesehen ist. Die Bremseinheit ist vorzugsweise als mechanische Bremseinheit ausgebildet. Der Ausdruck "mechanische Bremseinheit" soll hier insbesondere eine Bremseinheit definieren, die dazu vorgesehen ist, zumindest das Bremselement und/oder ein Gegenbremselement, insbesondere einen Bremsbelag, der Bremseinheit infolge einer mechanischen Betätigung, insbesondere infolge einer Ausübung einer Kraft eines Bauteils auf das Bremselement und/oder das Gegenbremselement durch einen direkten Kontakt zwischen dem Bauteil und dem Bremselement und/oder dem Gegenbremselement, in eine Bremsstellung und/oder in eine Lösestellung zu überführen, insbesondere entkoppelt von einer magnetischen Kraft. Unter "vorgesehen" soll insbesondere speziell ausgelegt und/oder speziell ausgestattet verstanden werden. Unter einer "Bremsstellung" soll hier insbesondere eine Stellung des Bremselements und/oder des Gegenbremselements verstanden werden, in der zumindest eine Bremskraft zu einer Reduzierung einer Geschwindigkeit in einem vorbestimmten Zeitraum, insbesondere um zumindest mehr als 50 %, bevorzugt um zumindest mehr als 65 % und besonders bevorzugt um zumindest mehr als 80 %, eines sich bewegenden Bauteils auf das sich bewegende Bauteil in zumindest einem Betriebszustand ausgeübt wird. Hierbei ist der vorbestimmte Zeitraum insbesondere kleiner als 5 s.

Der Begriff "Lösestellung" soll hier insbesondere eine Stellung des Bremselements und/oder des Gegenbremselements definieren, in der eine Einwirkung der Bremskraft zu einer Reduzierung der Geschwindigkeit auf das sich bewegende Bauteil zumindest im Wesentlichen verhindert wird. Die mechanische Bremseinheit ist bevorzugt dazu vorgesehen, das Bauteil insbesondere in einem vorbestimmten Zeitraum größer als 0,1 s, bevorzugt größer als 0,5 s und besonders bevorzugt kleiner als 3 s, ausgehend von einer Arbeitsgeschwindigkeit, abzubremsen, insbesondere auf eine Geschwindigkeit abzubremsen, die kleiner als 50 % der Arbeitsgeschwindigkeit ist, bevorzugt kleiner als 20 % der Arbeitsgeschwindigkeit ist und besonders bevorzugt auf eine Geschwindigkeit von 0 m/s abzubremsen. Besonders bevorzugt ist die mechanische Bremseinheit als Reibbremse ausgebildet. Hierbei ist das Bremselement bevorzugt als Bremsscheibe ausgebildet. Die Bremsscheibe ist vorzugsweise aus Edelstahl und/oder aus einem anderen, einem Fachmann als sinnvoll erscheinenden Material, wie beispielsweise Sinterbronze, Stahl, nitriertem Stahl, Aluminium oder einem anderen oberflächenbehandelten Stahl und/oder Metall, ausgebildet. Der Bremsbelag, mit dem das Bremselement zu einer Erzeugung einer Bremskraft zusammenwirkt, kann hierbei als Sinterbremsbelag, als organischer Bremsbelag, als Bremsbelag aus Karbon, als Bremsbelag aus Keramik oder als anderer, einem Fachmann als sinnvoll erscheinender Bremsbelag ausgebildet sein.

Vorzugsweise umfasst die Bremseinheit zur Überführung der Relativbewegung zwischen dem Mitnehmerelement und dem Bremselement in eine weitere Relativbewegung zwischen dem Mitnehmerelement und dem Bremselement bevorzugt eine Bewegungswandlungseinheit. Unter einer "Bewegungswandlungseinheit" soll hier insbesondere eine Einheit verstanden werden, die einen Mechanismus, insbesondere eine Rampe, ein Gewinde, ein Kurvengetriebe, ein Koppelgetriebe oder andere, einem Fachmann als sinnvoll erscheinende Mechanismen, umfasst, mittels dessen eine Bewegungsart, wie beispielsweise eine Translation, in eine andere Bewegungsart, wie beispielsweise eine Rotation und/oder eine Überlagerung von Rotation und Translation, umgewandelt werden kann und/oder eine Bewegung eines Bauteils entlang einer Richtung in eine Bewegung eines weiteren Bauteils in eine weitere Richtung umgewandelt werden kann. Bevorzugt wird mittels der Bewegungswandlungseinheit eine als Drehung ausgebildete Relativbewegung zwischen dem Mitnehmerelement und dem Bremselement in eine weitere als Translation ausgebildete Relativbewegung zwischen dem Mitnehmerelement und dem Bremselement überführt. Somit wird zu einer Erzeugung einer Bremskraft in einer Bremsstellung der Bremseinheit vorzugsweise das Bremselement durch eine Überlagerung einer Rotation und einer Translation relativ zum Mitnehmerelement bewegt. Hierdurch wird infolge eines Kontakts des Bremselements mit einem drehfest gelagerten Gegenbremselement der Bremseinheit eine Bremskraft infolge einer Reibung zwischen dem Bremselement und dem Gegenbremselement erzeugt. Der Begriff "Mitnehmerelement" soll hier insbesondere ein Element definieren, das dazu vorgesehen ist, bei einer Bewegung eines weiteren Elements mitbewegt zu werden, insbesondere zumindest zu Beginn einer Bewegung zeitversetzt relativ zum weiteren Element mitbewegt zu werden, und/oder das dazu vorgesehen ist, ein weiteres Element infolge einer Verbindung bei einer Bewegung mitzunehmen bzw. mitzubewegen. Das Mitnehmerelement ist bevorzugt dazu vorgesehen, zu Beginn einer Rotationsbewegung des Bremselements zeitversetzt relativ zur Bewegung des Bremselements vom Bremselement mitbewegt zu werden. Somit weist das Mitnehmerelement relativ zum Bremselement vorzugsweise ein Drehspiel auf, das eine Relativbewegung zwischen dem Mitnehmerelement und dem Bremselement um eine Drehachse entlang eines Winkelbereichs von größer als 1°, bevorzugt größer als 2° und besonders bevorzugt größer als 4° ermöglicht.

Unter einer "Bewegungseinheit" soll hier insbesondere eine Einheit verstanden werden, die einen Mechanismus, insbesondere eine Rampe, ein Gewinde, ein Kurvengetriebe, ein Koppelgetriebe oder andere, einem Fachmann als sinnvoll erscheinende Mechanismen, umfasst, mittels dessen eine Kraftkomponente zu einer Bewegung des Bremselements in Richtung des Mitnehmerelements erzeugbar ist. Hierbei ist es denkbar, dass die Bewegungseinheit von der Bewegungswandlungseinheit der Bremseinheit gebildet wird. Somit ist es denkbar, dass die Bewegungswandlungseinheit der Bremseinheit als Kurvengetriebe ausgebildet ist, das beispielsweise in eine Drehrichtung des Mitnehmerelements und/oder des Bremselements eine Relativbewegung zwischen dem Mitnehmerelement und dem Bremselement in eine weitere Relativbewegung zwischen dem Mitnehmerelement und dem Bremselement überführt und bei einer der Drehrichtung zur Überführung der Relativbewegung entgegengesetzten Drehrichtung des Mitnehmerelements und/oder des Bremselements eine Kraftkomponente zu einer Bewegung des Bremselements in Richtung des Mitnehmerelements erzeugt. Vorzugsweise sind die Bewegungswandlungseinheit der Bremseinheit und die Bewegungseinheit jedoch getrennt voneinander ausgebildet. Somit könnte die Bewegungseinheit beispielsweise von zumindest einem Federelement gebildet sein, das an einem Federelementaufnahmebereich des Bremselements anliegt und eine Kraftkomponente zu einer Bewegung des Bremselements in Richtung des Mitnehmerelements erzeugt. Weitere, einem Fachmann als sinnvoll erscheinende Ausgestaltungen der Bewegungseinheit sind ebenfalls denkbar. Bevorzugt wird in einem Betriebszustand, der einer Überführung der Bremseinheit in eine Lösestellung entspricht, mittels der Bewegungseinheit eine Kraftkomponente zu einer Bewegung des Bremselements in Richtung des Mitnehmerelements erzeugt. Mittels der erfindungsgemäßen Ausgestaltung der Werkzeugmaschinenbremsvorrichtung kann vorteilhaft eine sichere Überführung der Bremseinheit in eine Lösestellung erreicht werden. Somit kann vorteilhaft eine aktive und gezielte Deaktivierung der Bremseinheit ermöglicht werden. Insbesondere kann vorteilhaft bei einem Anlaufen einer tragbaren Werkzeugmaschine, die die Werkzeugmaschinenbremsvorrichtung umfasst, eine Überführung der Bremseinheit in die Lösestellung zuverlässig gewährleistet werden. Es kann vorteilhaft ein Eingriff des Bremselements in das Gegenbremselement der Bremseinheit und/oder ein Kontakt zwischen dem Bremselement und dem Gegenbremselement in zumindest einem Betriebszustand vorteilhaft aufgehoben werden. Somit können vorteilhaft Bauteile geschont werden und ein Verschleiß kann vorteilhaft gering gehalten werden.

Des Weiteren wird vorgeschlagen, dass die Bewegungseinheit zumindest ein Bewegungselement aufweist, das an dem Mitnehmerelement angeordnet ist. Bevorzugt ist das Bewegungselement einstückig mit dem Mitnehmerelement ausgebildet. Unter "einstückig" soll insbesondere zumindest stoffschlüssig verbunden verstanden werden, beispielsweise durch einen Schweißprozess, einen Klebeprozess, einen Anspritzprozess und/oder durch einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es kann vorteilhaft eine kompakte Anordnung von Bauteilen erreicht werden.

Vorteilhafterweise ist das Bewegungselement dazu vorgesehen, infolge einer Relativbewegung zwischen dem Mitnehmerelement und dem Bremselement zumindest eine Kraftkomponente in Richtung des Mitnehmerelements zur Bewegung des Bremselements zu erzeugen. Das Bewegungselement kann von verschiedenen, einem Fachmann als sinnvoll erscheinenden Bauteilen gebildet sein, wie beispielsweise von einem Bolzen eines Kurvengetriebes, der fest mit dem Mitnehmerelement verbunden ist, insbesondere an das Mitnehmerelement angeformt ist, und in eine als Nut ausgebildete Steuerkurve des Kurvengetriebes eingreift, oder von einem Rampenelement, das an dem Mitnehmerelement angeordnet ist und mit einem weiteren an dem Bremselement angeordneten Rampenelement zusammenwirkt. Mittels der erfindungsgemäßen Ausgestaltung kann vorteilhaft eine Bewegung des Mitnehmerelements und/oder des Bremselements, insbesondere eine Drehung um eine Drehachse des Mitnehmerelements und/oder des Bremselements, zur Erzeugung einer Kraftkomponente genutzt werden.

Besonders bevorzugt ist das Bewegungselement als Radialfortsatz ausgebildet, der sich zumindest im Wesentlichen senkrecht zu einer Drehachse des Mitnehmerelements erstreckt. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Es kann konstruktiv einfach in zumindest einem Betriebszustand eine Kraftkomponente zu einer Bewegung des Bremselements in Richtung des Mitnehmerelements erzeugt werden. Es kann vorteilhaft kostengünstig ein Bewegungselement gebildet werden.

Vorzugsweise wirkt das Bewegungselement zu einer Bewegung des Bremselements mit zumindest einem weiteren Bewegungselement der Bewegungseinheit zusammen, das an dem Bremselement angeordnet ist. Das Bremselement kann hierbei als Nut, als Radialfortsatz oder als anderes, einem Fachmann als sinnvoll erscheinendes Bauteil ausgebildet sein. Bevorzugt weist das Bremselement zumindest eine Montageausnehmung auf, in die das am Mitnehmerelement angeordnete Bewegungselement bei einer Montage axial einführbar ist. Somit hintergreift das am Mitnehmerelement angeordnete Bewegungselement in einem montierten Zustand bevorzugt das weitere am Bremselement angeordnete Bewegungselement. Somit wird eine Kraftkomponente zur Bewegung des Bremselements in Richtung des Mitnehmerelements mittels eines Zusammenwirkens des am Mitnehmerelement angeordneten Bewegungselements und des am Bremselement angeordneten Bewegungselements erzeugt, insbesondere infolge einer relativen Drehbewegung zwischen dem Mitnehmerelement und dem Bremselement. Es kann konstruktiv einfach eine Bewegungseinheit zur Bewegung des Bremselements in Richtung des Mitnehmerelements realisiert werden.

Ferner wird vorgeschlagen, dass das weitere Bewegungselement auf einer dem Mitnehmerelement abgewandten Seite eine Gleitfläche aufweist, auf der das am Mitnehmerelement angeordnete Bewegungselement infolge einer Relativbewegung zwischen dem Mitnehmerelement und dem Bremselement gleitet. Es ist jedoch auch denkbar, dass das am Mitnehmerelement angeordnete Bewegungselement als Wälzkörper ausgebildet ist, der zu einer Erzeugung einer Kraftkomponente zur Bewegung des Bremselements in Richtung des Mitnehmerelements auf der Gleitfläche abwälzt. Ferner ist es alternativ auch denkbar, dass das am Mitnehmerelement angeordnete Bewegungselement während einer Bewegung entlang des weiteren am Bremselement angeordneten Bewegungselements eine Kombination aus Gleiten und Wälzen ausübt. Es kann konstruktiv einfach eine Bewegung des Bremselements mittels eines Zusammenwirkens mit dem Mitnehmerelement erreicht werden.

Vorteilhafterweise ist das weitere Bewegungselement rampenförmig ausgebildet. Unter "rampenförmig" soll hier insbesondere eine geometrische Form verstanden werden, die entlang einer Strecke ausgehend von einem Startpunkt in Richtung eines Endpunkts eine mathematisch definierte Steigung aufweist, so dass zwischen dem Startpunkt und dem Endpunkt eine Höhendifferenz vorliegt und/oder der Startpunkt in einer Ebene angeordnet ist, die zumindest im Wesentlichen parallel versetzt zu einer Ebene verläuft, in der der Endpunkt angeordnet ist. Somit schließt eine von der Gleitfläche des Bewegungselements gebildete Ebene bevorzugt mit einer zu einer dem Mitnehmerelement zugewandten Seite des Bremselements zumindest im Wesentlichen parallel verlaufende Ebene einen von 90° und einem ganzzahligen Vielfachen von 90° abweichenden Winkel ein. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Mittels der erfindungsgemäßen Ausgestaltung kann kostengünstig eine Bewegungseinheit realisiert werden, bei der konstruktiv einfach eine axiale Bewegung des Bremselements in Richtung des Mitnehmerelements infolge einer Relativbewegung zwischen dem Mitnehmerelement und dem Bremselement erreicht werden kann.

Zudem wird vorgeschlagen, dass die Werkzeugmaschinenbremsvorrichtung zumindest eine Abtriebseinheit aufweist, die zumindest ein Abtriebselement umfasst, das drehfest mit dem Bremselement verbunden ist. Das Abtriebselement ist bevorzugt als Zahnrad, insbesondere als Tellerrad, der Abtriebseinheit ausgebildet. Unter einer "Abtriebseinheit" soll hier insbesondere eine Einheit verstanden werden, die mittels einer Antriebseinheit einer tragbaren Werkzeugmaschine antreibbar ist und von der Antriebseinheit erzeugte Kräfte und/oder Drehmomente auf ein Bearbeitungswerkzeug und/oder eine Werkzeugaufnahme einer tragbaren Werkzeugmaschine überträgt. Bevorzugt ist die Abtriebseinheit als Winkelgetriebe ausgebildet. Unter einem "Winkelgetriebe" soll hier insbesondere ein Getriebe verstanden werden, das zu einer Übertragung von Kräften und/oder Drehmomenten eine relativ zu einer Eingangswelle abgewinkelt angeordnete Ausgangswelle aufweist, wobei Rotationsachsen der Eingangswelle und der Ausgangswelle vorzugsweise einen gemeinsamen Schnittpunkt aufweisen. Unter "abgewinkelt angeordnet" soll hier insbesondere eine Anordnung einer Achse relativ zu einer weiteren Achse verstanden werden, insbesondere von zwei sich schneidenden Achsen, wobei die zwei Achsen einen von 180° abweichenden Winkel einschließen. Bevorzugt schließen eine Rotationsachse der Eingangswelle und eine Rotationsachse der Ausgangswelle in einem montierten Zustand der als Winkelgetriebe ausgebildeten Abtriebseinheit einen Winkel von 90° ein. Unter einer "Eingangswelle" soll hier insbesondere eine Welle verstanden werden, die Kräfte und/oder Drehmomente in die als Winkelgetriebe ausgebildete Abtriebseinheit einleitet. Die Eingangswelle kann hierbei beispielsweise als eine mit einem Ritzel ausgeführte Ankerwelle einer Elektromotoreinheit der Antriebseinheit ausgebildet sein. Unter einer "Ausgangswelle" soll hier insbesondere eine Welle verstanden werden, die Kräfte und/oder Drehmomente beispielsweise auf ein mit der Ausgangswelle drehfest verbundenes Bearbeitungswerkzeug und/oder auf eine mit der Ausgangswelle drehfest verbundene Werkzeugaufnahme einer tragbaren Werkzeugmaschine überträgt. Unter "drehfest" soll insbesondere eine Verbindung verstanden werden, die ein Drehmoment und/oder eine Drehbewegung zumindest im Wesentlichen unverändert überträgt. Unter "zumindest im Wesentlichen unverändert übertragen" soll hier insbesondere eine bis auf einen Verlust infolge von Reibung und/oder von Toleranzen vollständige Übertragung von Kräften und/oder Drehmomenten von einem Bauteil auf ein weiteres Bauteil verstanden werden. Es kann konstruktiv einfach eine kompakte Bremseinheit erreicht werden, die vorteilhaft auf ein Abtriebselement einwirken kann, um ein Auslaufen eines Bearbeitungswerkzeugs vorteilhaft abzubremsen.

Ferner wird vorgeschlagen, dass das Bremselement zumindest ein Drehmitnahmeelement aufweist, das dazu vorgesehen ist, das Bremselement formschlüssig mit dem Abtriebselement zu verbinden. Bevorzugt ist das Drehmitnahmeelement als bolzenförmiger Axialfortsatz ausgebildet, der in eine Ausnehmung des Abtriebselements eingreift. Hierbei ist es jedoch auch denkbar, dass das Bremselement einen bolzenförmigen Axialfortsatz aufweist, der in eine Ausnehmung des Drehmitnahmeelements eingreift. Ferner ist es jedoch auch denkbar, dass das Drehmitnahmeelement eine andere, einem Fachmann als sinnvoll erscheinende Ausgestaltung aufweist. Es kann konstruktiv einfach eine drehfeste Verbindung zwischen dem Bremselement und dem Abtriebselement realisiert werden.

Des Weiteren geht die Erfindung aus von einer tragbaren Werkzeugmaschine mit einer erfindungsgemäßen Werkzeugmaschinenbremsvorrichtung. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Bevorzugt ist die tragbare Werkzeugmaschine als Winkelschleifmaschine ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Kreissäge, als Bohrmaschine, als Bohr- und/oder Meißelhammer, als Gartengerät usw. Mittels der erfindungsgemäßen Ausgestaltung kann vorteilhaft ein hoher Bedienkomfort für einen Bediener der tragbaren Werkzeugmaschine erreicht werden, da insbesondere ein unrundes Anlaufen mittels einer Bewegung des Bremselements in Richtung des Mitnehmerelements bei einer Inbetriebnahme der tragbaren Werkzeugmaschine vorteilhaft gewährleistet werden kann.

Die erfindungsgemäße Werkzeugmaschinenbremsvorrichtung und/oder die erfindungsgemäße Werkzeugmaschine soll/sollen hierbei nicht auf die oben beschriebene Anwendung und Ausführungsform beschränkt sein. Insbesondere kann die erfindungsgemäße Werkzeugmaschinenbremsvorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße tragbare Werkzeugmaschine mit einer erfindungsgemäßen Werkzeugmaschinenbremsvorrichtung in einer schematischen Darstellung,
- Fig. 2: eine Detailansicht der erfindungsgemäßen Werkzeugmaschinenbremsvorrichtung in einer Bremsstellung der erfindungsgemäßen Werkzeugmaschinenbremsvorrichtung in einer schematischen Darstellung,
- Fig. 3: eine Detailansicht der erfindungsgemäßen Werkzeugmaschinenbremsvorrichtung in einer Lösestellung der erfindungsgemäßen Werkzeugmaschinenbremsvorrichtung in einer schematischen Darstellung,
- Fig. 4: eine Detailansicht eines Abtriebselements einer Abtriebseinheit der erfindungsgemäßen Werkzeugmaschinenbremsvorrichtung in einer schematischen Darstellung,
- Fig. 5: eine Detailansicht eines Mitnehmerelements einer Bremseinheit der erfindungsgemäßen Werkzeugmaschinenbremsvorrichtung in einer schematischen Darstellung,
- Fig. 6: eine Detailansicht eines Bremselements der Bremseinheit der erfindungsgemäßen Werkzeugmaschinenbremsvorrichtung in einer schematischen Darstellung,
- Fig. 7: eine weitere Detailansicht des Bremselements der Bremseinheit der erfindungsgemäßen Werkzeugmaschinenbremsvorrichtung in einer schematischen Darstellung und
- Fig. 8: eine Detailansicht der als Montagemodul ausgebildeten erfindungsgemäßen Werkzeugmaschinenbremsvorrichtung.

### Beschreibung des Ausführungsbeispiels

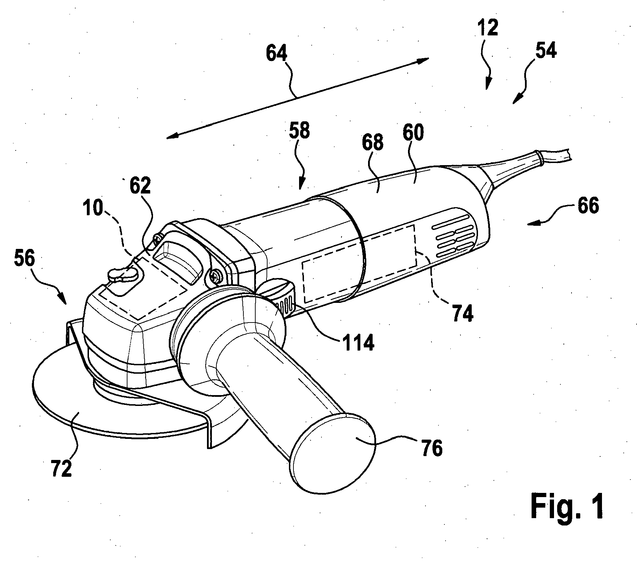

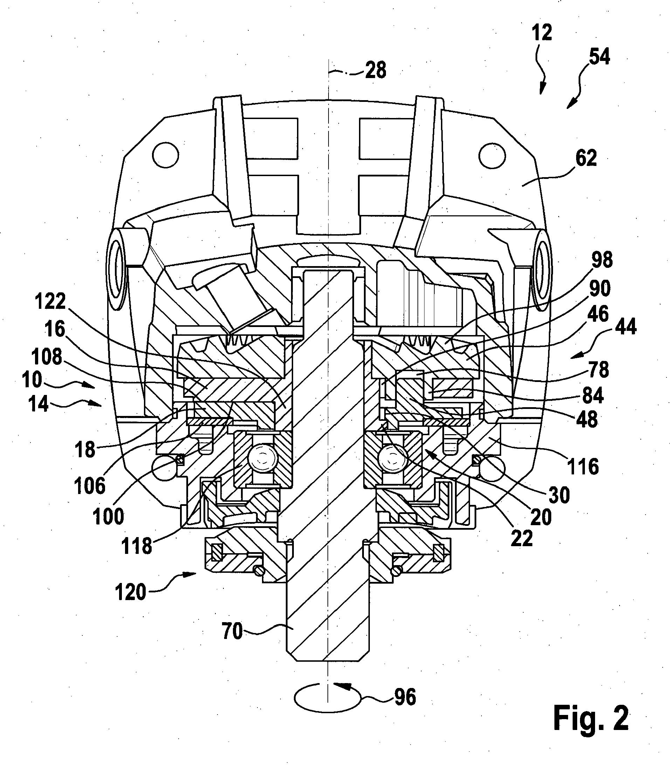

Figur 1 zeigt eine als Winkelschleifmaschine 54 ausgebildete tragbare Werkzeugmaschine 12 mit einer Werkzeugmaschinenbremsvorrichtung 10. Die Werkzeugmaschinenbremsvorrichtung 10 ist somit als Handwerkzeugmaschinenbremsvorrichtung ausgebildet. Die Winkelschleifmaschine 54 umfasst eine Schutzhaubeneinheit 56, ein Werkzeugmaschinengehäuse 58 und einen Haupthandgriff 60. Der Haupthandgriff 60 erstreckt sich ausgehend von einem Getriebegehäuse 62 des Werkzeugmaschinengehäuses 58 in eine vom Getriebegehäuse 62 abgewandte Richtung, die zumindest im Wesentlichen parallel zu einer Haupterstreckungsrichtung 64 der Winkelschleifmaschine 54 verläuft, bis zu einer Seite 66 des Werkzeugmaschinengehäuses 58 an der ein Kabel der Winkelschleifmaschine 54 zur Energieversorgung angeordnet ist. Der Haupthandgriff 60 bildet ein Motorgehäuse 68 des Werkzeugmaschinengehäuses 58. Aus dem Getriebegehäuse 62 heraus erstreckt sich eine als Spindel 70 ausgebildete Ausgangswelle einer Abtriebseinheit 44 der Werkzeugmaschinenbremsvorrichtung 10 (Figur 2), an der ein Bearbeitungswerkzeug 72 zu einer Bearbeitung eines Werkstücks (hier nicht näher dargestellt) fixiert werden kann. Das Bearbeitungswerkzeug 72 ist als Schleifscheibe ausgebildet. Es ist jedoch auch denkbar, dass das Bearbeitungswerkzeug 72 als Trenn- oder Polierscheibe ausgebildet ist. Das Werkzeugmaschinengehäuse 58 umfasst das Motorgehäuse 68 zur Aufnahme einer Antriebseinheit 74 der Winkelschleifmaschine 54 und das Getriebegehäuse 62 zur Aufnahme der Abtriebseinheit 44 bzw. der Werkzeugmaschinenbremsvorrichtung 10. Die Antriebseinheit 74 ist dazu vorgesehen, das Bearbeitungswerkzeug 72 über die Abtriebseinheit 44 rotierend anzutreiben. Ferner kann das Bearbeitungswerkzeug 72 mittels eines Befestigungselements (hier nicht näher dargestellt) zur Bearbeitung eines Werkstücks drehfest mit der Spindel 70 verbunden werden. Das Bearbeitungswerkzeug 72 kann somit in einem Betrieb der Winkelschleifmaschine 54 rotierend angetrieben werden. Die Abtriebseinheit 44 ist über ein als Ritzel ausgebildetes und rotierend antreibbares Antriebselement (hier nicht näher dargestellt) der Antriebseinheit 74 auf eine, einem Fachmann bereits bekannte Art und Weise mit der Antriebseinheit 74 verbunden. Zudem ist an dem Getriebegehäuse 62 ein Zusatzhandgriff 76 angeordnet. Der Zusatzhandgriff 76 erstreckt sich quer zur Haupterstreckungsrichtung 64 der Winkelschleifmaschine 54.

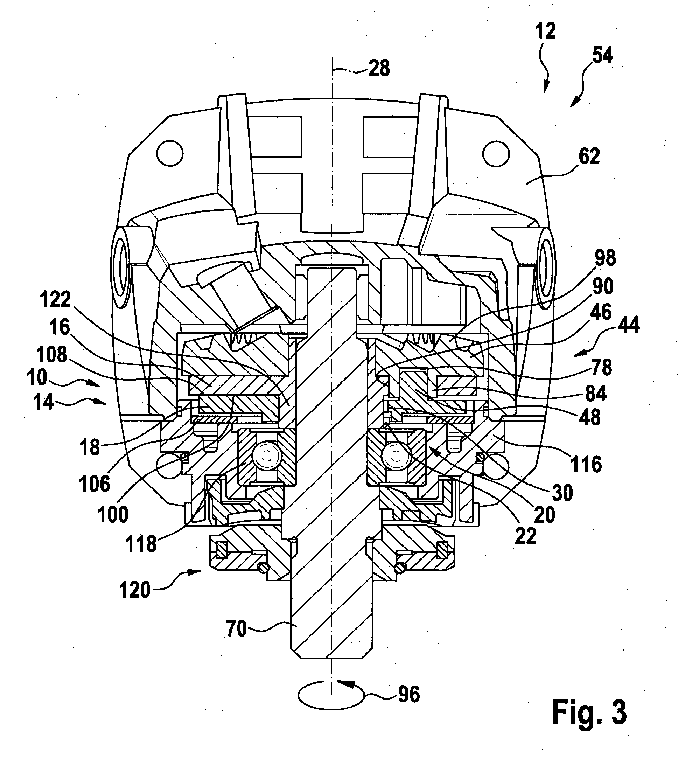

Die Abtriebseinheit 44 umfasst ferner einen Lagerflansch 116 und ein im Lagerflansch 116 angeordnetes Lagerelement 118 zur Lagerung der Spindel 70 (Figur 2). Der Lagerflansch 116 ist mittels Befestigungselementen (hier nicht näher dargestellt) der Abtriebseinheit 44 lösbar mit dem Getriebegehäuse 62 verbunden. Die Werkzeugmaschinenbremsvorrichtung 10 weist des Weiteren eine Ablaufsicherungseinheit 120 auf (Figuren 2 und 3), die dazu vorgesehen ist, ein Ablaufen des Bearbeitungswerkzeugs 72 und/oder des Befestigungselements zur Befestigung des Bearbeitungswerkzeugs 72 von der Spindel 70 in einem Bremsmodus der Werkzeugmaschinenbremsvorrichtung 10 zu verhindern. Die Ablaufsicherungseinheit 120 ist hierbei als Aufnahmeflansch ausgebildet, der mittels eines Formschlusses drehfest mit der Spindel 70 verbunden ist. Es ist jedoch auch denkbar, dass die Ablaufsicherungseinheit 120 mittels anderer, einem Fachmann als sinnvoll erscheinender Verbindungsarten drehfest mit der Spindel 70 verbunden ist.

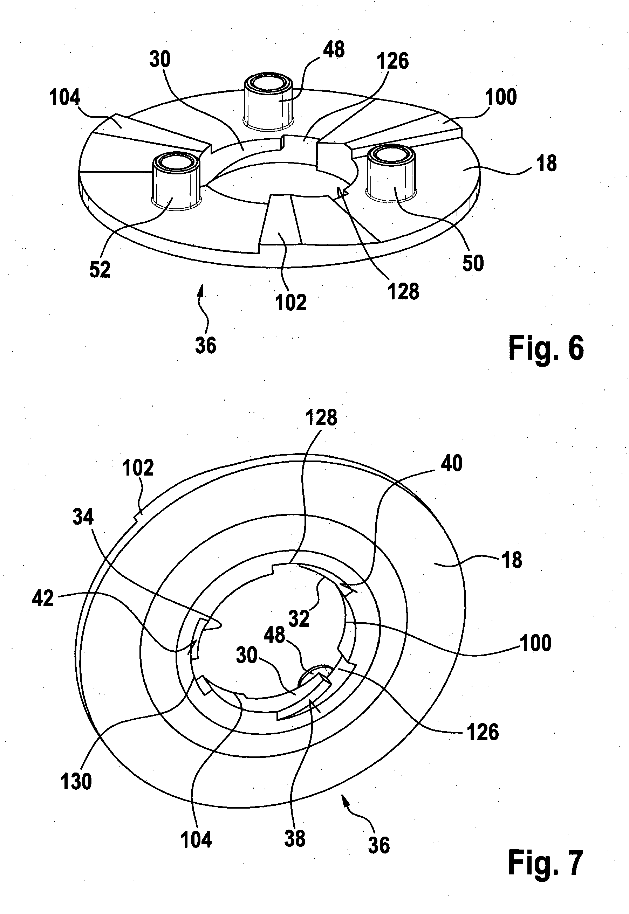

Figur 2 zeigt eine Detailansicht der Werkzeugmaschinenbremsvorrichtung 10 in einer Bremsstellung der Werkzeugmaschinenbremsvorrichtung 10 in einem an dem Werkzeugmaschinengehäuse 58 des Lagerflanschs 116 montierten Zustand. Die Werkzeugmaschinenbremsvorrichtung 10 umfasst zumindest eine Bremseinheit 14, die dazu vorgesehen ist, zu einer Erzeugung einer Bremskraft in einer Bremsstellung der Bremseinheit 14 zumindest teilweise eine Relativbewegung zwischen zumindest einem Mitnehmerelement 16 der Bremseinheit 14 und einem Bremselement 18 der Bremseinheit 14 in eine weitere Relativbewegung zwischen dem Mitnehmerelement 16 und dem Bremselement 18 zu überführen. Das Mitnehmerelement 16 ist in einem montierten Zustand drehfest mit der Spindel 70 verbunden. Das Bremselement 18 ist in einem montierten Zustand drehfest mit zumindest einem Abtriebselement 46 der Abtriebseinheit 44 verbunden. Hierbei weist das Bremselement 18 zumindest ein Drehmitnahmeelement 48 auf, das dazu vorgesehen ist, das Bremselement 18 formschlüssig mit dem Abtriebselement 46 zu verbinden. Insgesamt weist das Bremselement 18 drei Drehmitnahmeelemente 48, 50, 52 auf (Figur 6), die dazu vorgesehen sind, das Bremselement 18 formschlüssig mit dem Abtriebselement 46 zu verbinden. Es ist jedoch auch denkbar, dass das Bremselement 18 zu einer formschlüssigen Verbindung eine von drei abweichende Anzahl an Drehmitnahmeelementen 48, 50, 52 aufweist.

Die Drehmitnahmeelemente 48, 50, 52 sind als zylinderförmige Axialfortsätze ausgebildet, die sich in einem montierten Zustand des Bremselements 18 zumindest im Wesentlichen parallel zur einer Drehachse 28 des Mitnehmerelements 16 ausgehend von dem Bremselement 18 in Richtung des Abtriebselements 46 erstrecken. Es ist jedoch auch denkbar, dass die Drehmitnahmeelemente 48, 50, 52 eine andere, einem Fachmann als sinnvoll erscheinende Ausgestaltung aufweisen, wie beispielsweise eine polygonförmige Ausgestaltung. Das Abtriebselement 46 ist als Tellerrad ausgebildet. Das als Tellerrad ausgebildete Abtriebselement 46 ist zusammen mit dem Bremselement 18 drehbar um die Drehachse 28 des Mitnehmerelements 16, die koaxial zu einer Drehachse der Spindel 70 verläuft, um einen Winkel kleiner als 90° relativ zur Spindel 70 drehbar am Mitnehmerelement 16 gelagert.

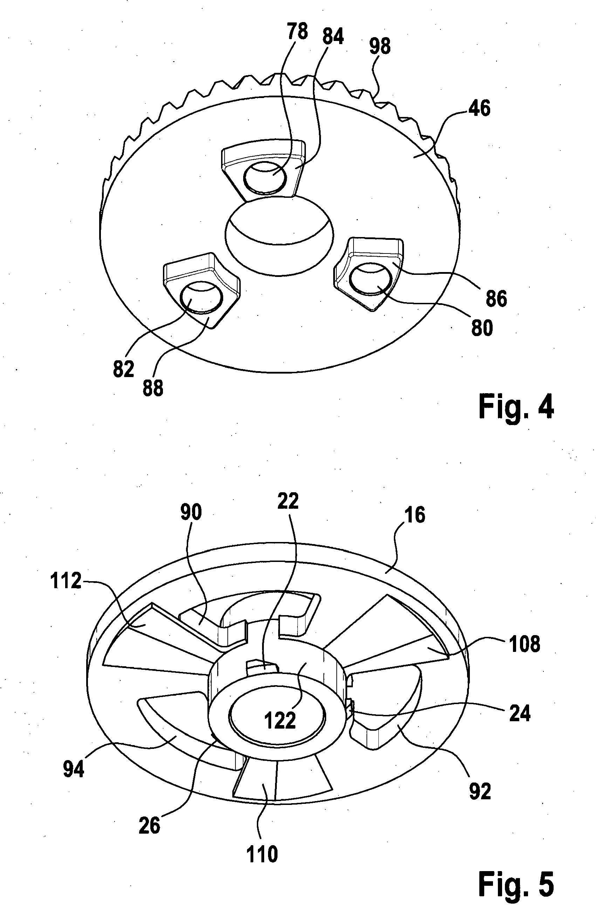

Ferner greifen die Drehmitnahmeelemente 48, 50, 52 zur formschlüssigen Verbindung mit dem Abtriebselement 46 jeweils in eine Drehmitnahmeausnehmung 78, 80, 82 des Abtriebselements 46 ein. Die Drehmitnahmeausnehmungen 78, 80, 82 sind hierbei jeweils in einem Anschlagelement 84, 86, 88 des Abtriebselements 46 angeordnet. Die Anschlagelemente 84, 86, 88 sind dazu vorgesehen, eine relative Drehbewegung des Abtriebselements 46 und somit des Bremselements 18 um die Drehachse 28 relativ zum Mitnehmerelement 16 auf einen vorgegebenen Winkelbereich zu begrenzen. Hierbei sind die Anschlagelemente 84, 86, 88 einstückig mit dem Abtriebselement 46 ausgebildet. Es ist jedoch auch denkbar, dass die Anschlagelemente 84, 86, 88 an einem von dem Abtriebselement 46 getrennt ausgebildeten Bauteil einstückig angeformt sind, das mittels Verbindungselementen, wie beispielsweise Schrauben usw., drehfest an dem Abtriebselement 46 fixiert ist. Die Anschlagelemente 84, 86, 88 sind entlang einer Umfangsrichtung 96 gleichmäßig verteilt auf einer einer Verzahnung 98 des als Tellerrad ausgebildeten Abtriebselements 46 abgewandten Seite des Abtriebselements 46 angeordnet (Figur 4). Die Umfangsrichtung 96 verläuft hierbei in einer sich senkrecht zu einer Drehachse des Abtriebselements 46 erstreckenden Ebene. Die Drehachse des Abtriebselements 46 verläuft in einem montierten Zustand koaxial zur Drehachse 28 des Mitnehmerelements 16.

Ferner greifen die Anschlagelemente 84, 86, 88 jeweils in eine Anschlagausnehmung 90, 92, 94 des Mitnehmerelements 16 ein. Die Anschlagausnehmungen 90, 92, 94 des Mitnehmerelements 16 sind gleichmäßig verteilt entlang der Umfangsrichtung 96 am Mitnehmerelement 16 angeordnet (Figur 5). Ferner weisen die Anschlagausnehmungen 90, 92, 94 entlang der Umfangsrichtung 96 eine im Vergleich zu den Anschlagelementen 84, 86, 88 größere Erstreckung auf. Somit wird ein Drehspiel zwischen dem Abtriebselement 46 und dem Mitnehmerelement 16 entlang der Umfangsrichtung 96 erreicht. Das Drehspiel wird von einem Winkelbereich gebildet, um den das Abtriebselement 46 relativ zum Mitnehmerelement 16 gedreht werden kann. Der Winkelbereich, um den das Abtriebselement 46 und somit das Bremselement 18 relativ zum Mitnehmerelement 16 um die Drehachse 28 drehbar gelagert ist, wird somit mittels eines Zusammenwirkens der Anschlagelemente 84, 86, 88 und der Anschlagausnehmungen 90, 92, 94 begrenzt.

Des Weiteren weist das Bremselement 18 auf einer in einem montierten Zustand dem Mitnehmerelement 16 zugewandten Seite Hubelemente 100, 102, 104 auf, die dazu vorgesehen sind, das Bremselement 18 bei einer Drehbewegung relativ zum Mitnehmerelement 16 und/oder zur Spindel 70 zu einer Erzeugung einer Bremskraft zu einem Abbremsen einer Drehbewegung des Abtriebselements 46 und der Spindel 70 in eine zumindest im Wesentlichen parallel zur Drehachse 28 des Mitnehmerelements 16 verlaufende und von dem Mitnehmerelement 16 abgewandte Richtung in Richtung eines von einem Bremsbelag gebildeten Gegenbremselements 106 der Bremseinheit 14 zu bewegen. Das Gegenbremselement 106 ist drehfest im Lagerflansch 116 der Abtriebseinheit 44 angeordnet. Insgesamt weist das Bremselement 18 drei Hubelemente 100, 102, 104 auf. Es ist jedoch auch denkbar, dass das Bremselement 18 eine von drei abweichende Anzahl an Hubelementen 100, 102, 104 aufweist. Die Hubelemente 100, 102, 104 sind entlang der Umfangsrichtung 96 gleichmäßig verteilt am Bremselement 18 angeordnet. Hierbei sind die Hubelemente 100, 102, 104 einstückig mit dem Bremselement 18 ausgebildet. Es ist jedoch auch denkbar, dass die Hubelemente 100, 102, 104 getrennt von dem Bremselement 18 ausgebildet sind und mittels einer, einem Fachmann als sinnvoll erscheinenden Verbindungsart, wie beispielsweise mittels einer formschlüssigen und/oder kraftschlüssigen Verbindungsart, fest mit dem Bremselement 18 verbunden sind. Die Hubelemente 100, 102, 104 sind rampenförmig ausgebildet. Somit weisen die Hubelemente 100, 102, 104 jeweils eine geometrische Ausgestaltung auf, die in einem montierten Zustand ausgehend von dem Bremselement 18 in Richtung des Mitnehmerelements 16 eine mathematisch definierte Steigung aufweist, wobei die Steigung einen von 0 abweichenden Wert aufweist.

Das Mitnehmerelement 16 weist für ein Zusammenwirken mit den Hubelementen 100, 102, 104 des Bremselements 18 zu einer Erzeugung einer Bewegung des Bremselements 18 relativ zum Mitnehmerelement 16 in Richtung des Gegenbremselements 106 infolge einer Drehbewegung des Bremselements 18 relativ zum Mitnehmerelement 16 ebenfalls Hubelemente 108, 110, 112 auf (Figur 5). Insgesamt weist das Mitnehmerelement 16 drei Hubelemente 108, 110, 112 auf. Es ist jedoch auch denkbar, dass das Mitnehmerelement 16 eine von drei abweichende Anzahl an Hubelementen 108, 110, 112 aufweist. Eine Anzahl an Hubelementen 108, 110, 112 des Mitnehmerelements 16 ist insbesondere abhängig von einer Anzahl an Hubelementen 100, 102, 104 des Bremselements 18, die mit den Hubelementen 108, 110, 112 des Mitnehmerelements 16 korrespondieren. Die Hubelemente 108, 110, 112 des Mitnehmerelements 16 sind entlang der Umfangsrichtung 96 gleichmäßig verteilt am Mitnehmerelement 16 angeordnet. Hierbei sind die Hubelemente 108, 110, 112 des Mitnehmerelements 16 einstückig mit dem Mitnehmerelement 16 ausgebildet. Es ist jedoch auch denkbar, dass die Hubelemente 108, 110, 112 des Mitnehmerelements 16 getrennt von dem Mitnehmerelement 16 ausgebildet sind und mittels einer, einem Fachmann als sinnvoll erscheinenden Verbindungsart, wie beispielsweise einer formschlüssigen und/oder kraftschlüssigen Verbindungsart, fest mit dem Mitnehmerelement 16 verbunden sind. Die Hubelemente 108, 110, 112 des Mitnehmerelements 16 sind rampenförmig ausgebildet. Somit weisen die Hubelemente 108, 110, 112 des Mitnehmerelements 16 eine geometrische Ausgestaltung auf, die in einem montierten Zustand ausgehend von dem Mitnehmerelement 16 in Richtung des Bremselements 18 eine mathematisch definierte Steigung aufweist, wobei die Steigung einen von 0 abweichenden Wert aufweist. Die Hubelemente 100, 102, 104 des Bremselements 18 und die Hubelemente 108, 110, 112 des Mitnehmerelements 16 bilden zusammen eine Bewegungswandlungseinheit der Bremseinheit 14, die zu einer Erzeugung einer Bremskraft in einer Bremsstellung der Bremseinheit 14 dazu vorgesehen ist, das Bremselement 18 durch eine Überlagerung einer Rotation und einer Translation relativ zum Mitnehmerelement 16 zu bewegen.

Bei einer Unterbrechung einer Energieversorgung der Antriebseinheit 74, wie beispielsweise infolge einer Betätigung eines als Ein-/Ausschalter ausgebildeten Bedienelements 114 (Figur 1) der Winkelschleifmaschine 54, wird eine Ankerwelle (hier nicht näher dargestellt) der Antriebseinheit 74 infolge einer, einem Fachmann bereits bekannten Einwirkung von Kräften und/oder Drehmomenten, wie beispielsweise von Reibkräften und magnetischen Kräften der Antriebseinheit 74, abgebremst. Das als Tellerrad ausgebildete Abtriebselement 46, das mit dem auf der Ankerwelle drehfest angeordneten Antriebselement (hier nicht näher dargestellt) der Antriebseinheit 74 kämmt, die Spindel 70, das an der Spindel 70 befestigte Bearbeitungswerkzeug 72, das an der Spindel 70 drehfest angeordnete Mitnehmerelement 16 und das drehfest mit dem Abtriebselement 46 verbundene Bremselement 18 wirken infolge einer Massenträgheit der Bauteile einer Bremsung der Ankerwelle entgegen. Das Abtriebselement 46, die Spindel 70, das Bearbeitungswerkzeug 72, das Mitnehmerelement 16 und das Bremselement 18 sind hierbei bestrebt infolge einer Massenträgheit der Bauteile weiter um die Drehachse 28 zu rotieren.

Infolge eines Kämmens des Antriebselements der Antriebseinheit 74 mit dem Abtriebselement 46 und infolge des Drehspiels zwischen dem drehfest auf der Spindel 70 angeordneten Mitnehmerelement 16 und dem Abtriebselement 46 sowie dem Bremselement 18 wird das Abtriebselement 46 und das Bremselement 18 bei einer Unterbrechung einer Energieversorgung der Antriebseinheit 74 relativ zur Spindel 70 verdreht. Hierbei gleiten die Hubelemente 100, 102, 104 des Bremselements 18 auf den Hubelementen 108, 110, 112 des Mitnehmerelements 16. Das Bremselement 18 wird mittels eines Zusammenwirkens der Hubelemente 100, 102, 104 des Bremselements 18 und der Hubelemente 108, 110, 112 des Mitnehmerelements 16 zusätzlich zu einer relativen Drehbewegung linear in Richtung des Gegenbremselements 106 relativ zum Mitnehmerelement 16 bewegt. Hierdurch gelangen das Bremselement 18 und das Gegenbremselement 106 in Kontakt, wodurch eine Bremskraft in einer Bremsstellung der Bremseinheit 14 zu einem Abbremsen einer Drehbewegung der Spindel 70, des Bearbeitungswerkzeugs 72 und des Mitnehmerelements 16 erzeugt wird. Die Bremseinheit 14 ist somit in einer Bremsstellung. Die Bremskraft wird mittels einer Reibung zwischen dem Bremselement 18 und dem Gegenbremselement 106 erzeugt. Das Bremselement 18 kann hierbei solange eine Drehbewegung relativ zum Mitnehmerelement 16 ausüben, bis die Anschlagelemente 84, 86, 88 an Randbereichen der Anschlagausnehmungen 90, 92, 94 des Mitnehmerelements 16 anschlagen. Die Hubelemente 100, 102, 104 des Bremselements 18 und die Hubelemente 108, 110, 112 des Mitnehmerelements 16 gleiten bis zu einem Anschlagen der Anschlagelemente 84, 86, 88 an den Randbereichen der Anschlagausnehmungen 90, 92, 94 des Mitnehmerelements 16 infolge einer Reibkraft zwischen dem Bremselement 18 und dem Gegenbremselement 106 weiter aufeinander und bewegen das Bremselement 18 somit weiter in Richtung des Gegenbremselements 106. Infolge der weiteren Bewegung des Bremselements 18 in Richtung des Gegenbremselements 106 wird eine von dem Bremselement 18 in der Bremsstellung der Bremseinheit 14 auf das Gegenbremselement 106 wirkende Axialkraft erhöht. Die erhöhte Axialkraft hat eine Erhöhung der Bremskraft zur Folge. Somit weist die Bremseinheit 14 eine Selbsthemmungsfunktion auf. Die Spindel 70, das Bearbeitungswerkzeug 72 und das Mitnehmerelement 16 sowie die Ankerwelle, das Abtriebselement 46 und das Bremselement 18 werden hierdurch bis zu einem Stillstand abgebremst.

Bei einer Inbetriebnahme der Winkelschleifmaschine 54 soll gewährleistet werden, dass das Bremselement 18 und das Gegenbremselement 106 zuverlässig außer Eingriff gebracht werden bzw. ein Kontakt zwischen dem Bremselement 18 und dem Gegenbremselement 106 zuverlässig aufgehoben wird. Die Werkzeugmaschinenbremsvorrichtung 10 umfasst hierfür zumindest eine Bewegungseinheit 20, die in zumindest einem Betriebszustand zu einer Bewegung des Bremselements 18 in Richtung des Mitnehmerelements 16 zumindest zu einer Erzeugung einer Kraftkomponente in Richtung des Mitnehmerelements 16 vorgesehen ist. Die Bewegungseinheit 20 weist zumindest ein Bewegungselement 22 auf, das an dem Mitnehmerelement 16 angeordnet ist. Insgesamt weist die Bewegungseinheit 20 drei Bewegungselemente 22, 24, 26 auf, die an dem Mitnehmerelement 16 angeordnet sind (Figur 5). Es ist jedoch auch denkbar, dass die Bewegungseinheit 20 eine von drei abweichende Anzahl an Bewegungselementen 22, 24, 26 aufweist. Die Bewegungselemente 22, 24, 26 sind an einem sich zumindest im Wesentlichen parallel zur Drehachse 28 und in einem montierten Zustand in eine von dem Abtriebselement 46 abgewandte Richtung erstreckenden Axialfortsatz 122 des Mitnehmerelements 16 angeordnet. Der Axialfortsatz 122 ist hohlzylinderförmig ausgebildet. Die Bewegungselemente 22, 24, 26 sind als Radialfortsätze ausgebildet, die sich zumindest im Wesentlichen senkrecht zur Drehachse 28 des Mitnehmerelements 16 erstrecken. Hierbei sind die Bewegungselemente 22, 24, 26 entlang der Umfangsrichtung 96 gleichmäßig verteilt am Axialfortsatz 122 angeordnet. Die Bewegungselemente 22, 24, 26 sind dazu vorgesehen, infolge einer als Drehbewegung ausgebildeten Relativbewegung zwischen dem Mitnehmerelement 16 und dem Bremselement 18 zumindest eine Kraftkomponente in Richtung des Mitnehmerelements 16 zur Bewegung des Bremselements 18 zu erzeugen.

Die Bewegungselemente 22, 24, 26 wirken zu einer Bewegung des Bremselements 18 mit zumindest einem weiteren Bewegungselement 30 der Bewegungseinheit 20 zusammen, das an dem Bremselement 18 angeordnet ist. Insgesamt sind drei weitere Bewegungselemente 30, 32, 34 der Bewegungseinheit 20 an dem Bremselement 18 angeordnet (Figur 7). Es ist jedoch auch denkbar, dass die Bewegungseinheit 20 eine von drei abweichende Anzahl an weiteren Bewegungselementen 30, 32, 34 aufweist. Eine Anzahl an weiteren an dem Bremselement 18 angeordneten Bewegungselementen 30, 32, 34 ist insbesondere abhängig von einer Anzahl an Bewegungselementen 22, 24, 26, die an dem Mitnehmerelement 16 angeordnet sind. Die weiteren Bewegungselemente 30, 32, 34 sind an einem der Spindel 70 zugewandten Randbereich einer Ausnehmung des Bremselements 18 angeordnet. Die Ausnehmung des Bremselements 18 ist zu einer Aufnahme der Spindel 70 vorgesehen, die sich in einem montierten Zustand durch die Ausnehmung hindurch erstreckt. Die weiteren Bewegungselemente 30, 32, 34 sind rampenförmig ausgebildet. Hierbei sind die weiteren Bewegungselemente 30, 32, 34 als rampenförmige Radialfortsätze ausgebildet, die sich jeweils entlang eines Winkelbereichs größer als 45° entlang der Umfangsrichtung 96 an dem Randbereich der Ausnehmung des Bremselements 18 erstrecken. Somit weisen die weiteren Bewegungselemente 30, 32, 34 eine geometrische Ausgestaltung auf, die eine mathematisch definierte Steigung aufweist, wobei die Steigung einen von 0 abweichenden Wert aufweist.

Es ist jedoch auch denkbar, dass die weiteren Bewegungselemente 30, 32, 34 als rampenförmige Nuten ausgebildet sind, in die die am Mitnehmerelement 16 angeordneten Bewegungselemente 22, 24, 26 in einem montierten Zustand eingreifen. Bei einer alternativen Ausgestaltung der weiteren Bewegungselemente 30, 32, 34 als rampenförmige Nuten ist es denkbar, dass das Bremselement 18 und das Mitnehmerelement 16 entkoppelt von den Hubelementen 100, 102, 104 und von den weiteren Hubelementen 108, 110, 112 ausgebildet sind und ein Zusammenwirken der weiteren als rampenförmige Nuten ausgebildeten Bewegungselemente 30, 32, 34 mit den am Mitnehmerelement 16 angeordneten Bewegungselementen 22, 24, 26 in Abhängigkeit einer Drehrichtung des Bremselements 18 relativ zum Mitnehmerelement 16 zusätzlich zu einer Bewegung des Bremselements 18 in Richtung des Mitnehmerelements 16 dazu vorgesehen sind, das Bremselement 18 in Richtung des Gegenbremselements 106 zu bewegen.

Ferner weisen die weiteren Bewegungselemente 30, 32, 34 auf einer dem Mitnehmerelement 16 abgewandten Seite 36 jeweils eine Gleitfläche 38, 40, 42 auf (Figur 7), auf der die am Mitnehmerelement 16 angeordneten Bewegungselemente 22, 24, 26 infolge einer Relativbewegung zwischen dem Mitnehmerelement 16 und dem Bremselement 18 gleiten. Mittels eines Zusammenwirkens der rampenförmigen Ausgestaltung der weiteren Bewegungselemente 30, 32, 34 und des Gleitens der am Mitnehmerelement 16 angeordneten Bewegungselemente 22, 24, 26 infolge einer relativen Drehbewegung zwischen dem Mitnehmerelement 16 und dem Bremselement 18 wird das Bremselement 18 bei einer Inbetriebnahme der Winkelschleifmaschine 54, insbesondere bei einer Energieversorgung der Antriebseinheit 74 zu einem rotierenden Antrieb der Spindel 70 und/oder des Bearbeitungswerkzeugs 72, in Richtung des Mitnehmerelements 16 bewegt. Die Drehrichtung des Bremselements 18 bei einer Bewegung in Richtung des Mitnehmerelements 16 infolge einer relativen Drehbewegung zwischen dem Mitnehmerelement 16 und dem Bremselement 18 verläuft hierbei entgegengesetzt zu einer Drehrichtung des Bremselements 18 bei einer Bewegung in Richtung des Gegenbremselements 106 infolge einer relativen Drehbewegung zwischen dem Mitnehmerelement 16 und dem Bremselement 18.

Das Bremselement 18 wird solange infolge einer relativen Drehbewegung zwischen dem Mitnehmerelement 16 und dem Bremselement 18 und eines Zusammenwirkens zwischen den Bewegungselementen 22, 24, 26 und den weiteren Bewegungselementen 30, 32, 34 in Richtung des Mitnehmerelements 16 bewegt, bis die Anschlagelemente 84, 86, 88 an Randbereichen der Anschlagausnehmungen 90, 92, 94 anliegen. Die Bremseinheit 14 ist somit in einer Lösestellung. In der Lösestellung ist das Bremselement 18, entlang der Drehachse 28 betrachtet, relativ zum Gegenbremselement 106 beabstandet angeordnet (Figur 3). Die weiteren Bewegungselemente 30, 32, 34 und die am Mitnehmerelement 16 angeordneten Bewegungselemente 22, 24, 26 sind derart ausgebildet, dass in einem Endbereich der weiteren Bewegungselemente 30, 32, 34 in der Bremsstellung der Bremseinheit 14 ein geringes Spiel entlang einer zumindest im Wesentlichen parallel zur Drehachse 28 verlaufenden Richtung zwischen den weiteren Bewegungselementen 30, 32, 34 und den an dem Mitnehmerelement 16 angeordneten Bewegungselementen 22, 24, 26 vorliegt.

Zu einer Montage des Bremselements 18 an dem Mitnehmerelement 16 weist das Bremselement 18 Montageausnehmungen 126, 128, 130 auf, in die die am Mitnehmerelement 16 angeordneten Bewegungselemente 22, 24, 26 zu einer Kopplung mit den weiteren Bewegungselementen 30, 32, 34 axial einführbar sind. Die Montageausnehmungen 126, 128, 130 sind entlang der Umfangsrichtung 96 betrachtet jeweils zwischen zwei der weiteren Bewegungselemente 30, 32, 34 angeordnet. Bei einer Montage werden die am Mitnehmerelement 16 angeordneten Bewegungselemente 22, 24, 26 axial in die Montageausnehmungen 126, 128, 130 eingeführt. Zudem werden die Drehmitnahmeelemente 48, 50, 52 des Bremselements 18 in die Anschlagausnehmungen 90, 92, 94 des verbundenen Mitnehmerelements 16 eingeführt.

Anschließend wird das Bremselement 18 relativ zum Mitnehmerelement 16 um die Drehachse 28 verdreht, bis die Drehmitnahmeelemente 48, 50, 52 beabstandet zu den Randbereichen der Anschlagausnehmungen 90, 92, 94 angeordnet sind, um ein Einführen der Anschlagelemente 84, 86, 88 des Abtriebselements 46 in die Anschlagausnehmungen 90, 92, 94 und ein Einführen der Drehmitnahmeelemente 48, 50, 52 in die Drehmitnahmeausnehmungen 78, 80, 82 der Anschlagelemente 84, 86, 88 ermöglicht wird. Die am Mitnehmerelement 16 angeordneten Bewegungselemente 22, 24, 26 werden infolge der relativen Drehbewegung zur Einführung der Anschlagelemente 84, 86, 88 des Abtriebselements 46 in die Anschlagausnehmungen 90, 92, 94 in Kontakt mit den Gleitflächen 38, 40, 42 gebracht. Infolge der Einführung der Drehmitnahmeelemente 48, 50, 52 in die Drehmitnahmeausnehmungen 78, 80, 82 der Anschlagelemente 84, 86, 88 wird zudem eine Verdrehbarkeit des Bremselements 18 relativ zum Mitnehmerelement 16 derart begrenzt, dass ein axiales Herausführen der Bewegungselemente 22, 24, 26 aus den Montageausnehmungen 126, 128, 130 nur infolge einer Demontage des Abtriebselements 46 möglich ist. Das Bremselement 18 ist somit verliersicher mit dem Abtriebselement 46 und dem Mitnehmerelement 16 verbunden. Somit kann die Baugruppe bestehend aus dem Mitnehmerelement 16, dem Bremselement 18 und dem Abtriebselement 46 mit der Spindel 70 gekoppelt werden.

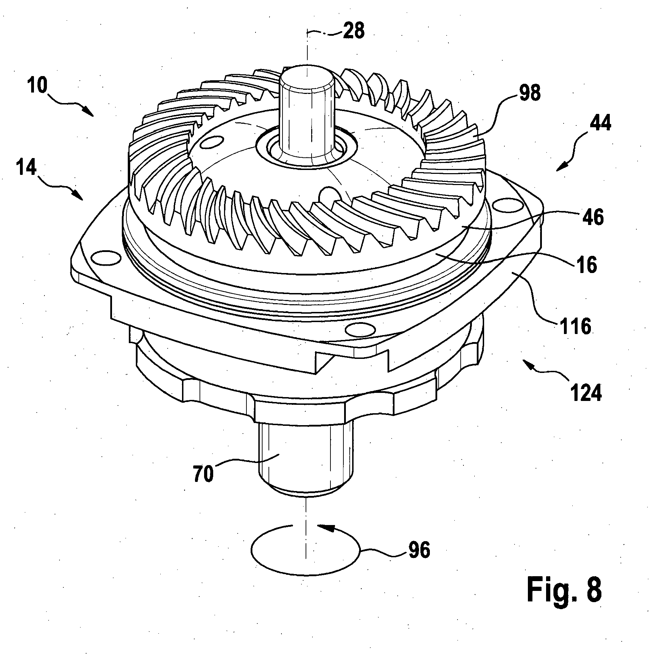

Die Werkzeugmaschinenbremsvorrichtung 10 ist als Montagemodul 124 ausgebildet (Figur 8). Das Montagemodul 124 umfasst vier als Schrauben ausgebildete Befestigungselemente (hier nicht näher dargestellt). Die Schrauben sind dazu vorgesehen, das Montagemodul 124 lösbar mit dem Getriebegehäuse 62 zu verbinden. Ein Bediener kann das Montagemodul 124 bei Bedarf von dem Getriebegehäuse 62 demontieren. Die Winkelschleifmaschine 54 und die Werkzeugmaschinenbremsvorrichtung 10 bilden somit ein Werkzeugmaschinensystem. Das Werkzeugmaschinensystem kann ein weiteres Montagemodul umfassen. Das weitere Montagemodul kann beispielsweise eine als Winkelgetriebe ausgebildete Abtriebseinheit umfassen, die entkoppelt von einer Bremseinheit ausgebildet ist. Das weitere Montagemodul könnte beispielsweise von einem Bediener alternativ zum Montagemodul 124 am Getriebegehäuse 62 montiert werden. Ein Bediener hat somit die Möglichkeit, die Winkelschleifmaschine 54 mit dem Montagemodul 124 mit der Bremseinheit 14 und der Abtriebseinheit 44 oder mit dem weiteren Montagemodul mit einer von einer Bremseinheit entkoppelten Abtriebseinheit auszustatten. Für einen Anwendungsfall, in dem die Winkelschleifmaschine 54 entkoppelt von der Werkzeugmaschinenbremsvorrichtung 10 betrieben werden soll, kann das Montagemodul 124 durch das weitere Montagemodul des Werkzeugmaschinensystems von einem Bediener ausgetauscht werden. Hierzu demontiert ein Bediener lediglich das Montagemodul 124 von dem Getriebegehäuse 62 und montiert das weitere Montagemodul am Getriebegehäuse 62.

## Patentansprüche

1. Werkzeugmaschinenbremsvorrichtung, insbesondere Handwerkzeugmaschinenbremsvorrichtung, einer tragbaren Werkzeugmaschine, mit zumindest einer Bremseinheit (14), die dazu vorgesehen ist, zu einer Erzeugung einer Bremskraft in einer Bremsstellung der Bremseinheit (14) zumindest teilweise eine Relativbewegung zwischen zumindest einem Mitnehmerelement (16) der Bremseinheit (14) und zumindest einem Bremselement (18) der Bremseinheit (14) in eine weitere Relativbewegung zwischen dem Mitnehmerelement (16) und dem Bremselement (18) zu überführen,
**gekennzeichnet durch** zumindest eine Bewegungseinheit (20), die in zumindest einem Betriebszustand zu einer Bewegung des Bremselements (18) in Richtung des Mitnehmerelements (16) zumindest zu einer Erzeugung einer Kraftkomponente in Richtung des Mitnehmerelements (16) vorgesehen ist.

2. Werkzeugmaschinenbremsvorrichtung nach Anspruch 1,
**dadurch gekennzeichnet, dass** die Bewegungseinheit (20) zumindest ein Bewegungselement (22, 24, 26) aufweist, das an dem Mitnehmerelement (16) angeordnet ist.

3. Werkzeugmaschinenbremsvorrichtung nach Anspruch 2,
**dadurch gekennzeichnet, dass** das Bewegungselement (22, 24, 26) dazu vorgesehen ist, infolge einer Relativbewegung zwischen dem Mitnehmerelement (16) und dem Bremselement (18) zumindest eine Kraftkomponente in Richtung des Mitnehmerelements (16) zur Bewegung des Bremselements (18) zu erzeugen.

4. Werkzeugmaschinenbremsvorrichtung nach Anspruch 2,
**dadurch gekennzeichnet, dass** das Bewegungselement (22, 24, 26) als Radialfortsatz ausgebildet ist, der sich zumindest im Wesentlichen senkrecht zu einer Drehachse (28) des Mitnehmerelements (16) erstreckt.

5. Werkzeugmaschinenbremsvorrichtung nach Anspruch 2,
**dadurch gekennzeichnet, dass** das Bewegungselement (22, 24, 26) zu einer Bewegung des Bremselements (18) mit zumindest einem weiteren Bewegungselement (30, 32, 34) der Bewegungseinheit (20) zusammenwirkt, das an dem Bremselement (18) angeordnet ist.

6. Werkzeugmaschinenbremsvorrichtung nach Anspruch 5,
**dadurch gekennzeichnet, dass** das weitere Bewegungselement (30, 32, 34) auf einer dem Mitnehmerelement (16) abgewandten Seite (36) eine Gleitfläche (38, 40, 42) aufweist, auf der das am Mitnehmerelement (16) angeordnete Bewegungselement (22, 24, 26) infolge einer Relativbewegung zwischen dem Mitnehmerelement (16) und dem Bremselement (18) gleitet.

7. Werkzeugmaschinenbremsvorrichtung nach Anspruch 5,
**dadurch gekennzeichnet, dass** das weitere Bewegungselement (30, 32, 34) rampenförmig ausgebildet ist.

8. Werkzeugmaschinenbremsvorrichtung nach einem der vorhergehenden Ansprüche,
**gekennzeichnet durch** zumindest eine Abtriebseinheit (44), die zumindest ein Abtriebselement (46) umfasst, das drehfest mit dem Bremselement (18) verbunden ist.

9. Werkzeugmaschinenbremsvorrichtung nach Anspruch 8,
**dadurch gekennzeichnet, dass** das Bremselement (18) zumindest ein Drehmitnahmeelement (48, 50, 52) aufweist, das dazu vorgesehen ist, das Bremselement (18) formschlüssig mit dem Abtriebselement (46) zu verbinden.

10. Tragbare Werkzeugmaschine mit einer Werkzeugmaschinenbremsvorrichtung nach einem der vorhergehenden Ansprüche.

## Claims

1. Power tool braking device, in particular hand-held power tool braking device, for a portable power tool, having at least one braking unit (14) which, in order to produce a braking force in a braking position of the braking unit (14), is intended to at least partially convert a relative movement between at least one driver element (16) of the braking unit (14) and at least one braking element (18) of the braking unit (14) into a further relative movement between the driver element (16) and the braking element (18),
**characterized by** at least one movement unit (20) which is intended, in at least one operating state, to move the braking element (18) in the direction of the driver element (16) at least in order to produce a force component in the direction of the driver element (16).

2. Power tool braking device according to Claim 1,
**characterized in that** the movement unit (20) has at least one movement element (22, 24, 26) which is arranged on the driver element (16).

3. Power tool braking device according to Claim 2,
**characterized in that** the movement element (22, 24, 26) is intended, as a result of a relative movement between the driver element (16) and the braking element (18), to produce at least one force component in the direction of the driver element (16) in order to move the braking element (18).

4. Power tool braking device according to Claim 2,
**characterized in that** the movement element (22, 24, 26) is in the form of a radial extension which extends at least substantially perpendicularly to a rotation axis (28) of the driver element (16).

5. Power tool braking device according to Claim 2,
**characterized in that,** in order to move the braking element (18), the movement element (22, 24, 26) interacts with at least one further movement element (30, 32, 34) of the movement unit (20), said further movement element (30, 32, 34) being arranged on the braking element (18).

6. Power tool braking device according to Claim 5,
**characterized in that** the further movement element (30, 32, 34) has, on a side (36) facing away from the driver element (16), a sliding surface (38, 40, 42) on which the movement element (22, 24, 26) arranged on the driver element (16) slides as a result of a relative movement between the driver element (16) and the braking element (18).

7. Power tool braking device according to Claim 5,
**characterized in that** the further movement element (30, 32, 34) is configured in a ramp-like manner.

8. Power tool braking device according to one of the preceding claims,
**characterized by** at least one output unit (44) which comprises at least one output element (46) which is connected to the braking element (18) for conjoint rotation.

9. Power tool braking device according to Claim 8,
**characterized in that** the braking element (18) has at least one rotary entrainment element (48, 50, 52) which is intended to connect the braking element (18) to the output element (46) in a form-fitting manner.

10. Portable power tool having a power tool braking device according to one of the preceding claims.

## Revendications

1. Dispositif de freinage pour une machine-outil, en particulier dispositif de freinage pour une machine-outil manuelle, d'une machine-outil portative, comprenant au moins une unité de freinage (14) qui est prévue, en vue de générer une force de freinage dans une position de freinage de l'unité de freinage (14), pour transférer au moins en partie un mouvement relatif entre au moins un élément d'entraînement (16) de l'unité de freinage (14) et au moins un élément de freinage (18) de l'unité de freinage (14) en un mouvement relatif supplémentaire entre l'élément d'entraînement (16) et l'élément de freinage (18), **caractérisé par** au moins une unité de déplacement (20) qui est prévue au moins pour générer une composante de force dans la direction de l'élément d'entraînement (16) dans au moins un état fonctionnel, en vue d'obtenir un mouvement de l'élément de freinage (18) dans la direction de l'élément d'entraînement (16).

2. Dispositif de freinage pour une machine-outil selon la revendication 1,
**caractérisé en ce que** l'unité de déplacement (20) présente au moins un élément de déplacement (22, 24, 26) qui est disposé au niveau de l'élément d'entraînement (16).

3. Dispositif de freinage pour une machine-outil selon la revendication 2,
**caractérisé en ce que** l'élément de déplacement (22, 24, 26) est prévu, suite à un mouvement relatif entre l'élément d'entraînement (16) et l'élément de freinage (18), pour générer au moins une composante de force dans la direction de l'élément d'entraînement (16) pour déplacer l'élément de freinage (18).

4. Dispositif de freinage pour une machine-outil selon la revendication 2,
**caractérisé en ce que** l'élément de déplacement (22, 24, 26) est réalisé sous forme de saillie radiale qui s'étend au moins essentiellement perpendiculairement à un axe de rotation (28) de l'élément d'entraînement (16).

5. Dispositif de freinage pour une machine-outil selon la revendication 2,
**caractérisé en ce que** l'élément de déplacement (22, 24, 26), en vue d'obtenir un déplacement de l'élément de freinage (18), coopère avec au moins un élément de déplacement supplémentaire (30, 32, 34) de l'unité de déplacement (20), qui est disposé au niveau de l'élément de freinage (18).

6. Dispositif de freinage pour une machine-outil selon la revendication 5,
**caractérisé en ce que** l'élément de déplacement supplémentaire (30, 32, 34) présente, sur un côté (36) opposé à l'élément d'entraînement (16), une surface de glissement (38, 40, 42) sur laquelle glisse l'élément de déplacement (22, 24, 26) disposé au niveau de l'élément d'entraînement (16) suite à un mouvement relatif entre l'élément d'entraînement (16) et l'élément de freinage (18).

7. Dispositif de freinage pour une machine-outil selon la revendication 5,
**caractérisé en ce que** l'élément de déplacement supplémentaire (30, 32, 34) est réalisée en forme de rampe.

8. Dispositif de freinage pour une machine-outil selon l'une quelconque des revendications précédentes,
**caractérisé par** au moins une unité de prise de force (44), qui comprend au moins un élément de prise de force (46) qui est connectée de manière solidaire en rotation à l'élément de freinage (18).

9. Dispositif de freinage pour une machine-outil selon la revendication 8,
**caractérisé en ce que** l'élément de freinage (18) présente au moins un élément d'entraînement en rotation (48, 50, 52) qui est prévu pour relier par engagement par correspondance de forme l'élément de freinage (18) à l'élément de prise de force (46).

10. Machine-outil portative comprenant un dispositif de freinage pour une machine-outil selon l'une quelconque des revendications précédentes.
